# EUROPEAN PATENT APPLICATION

(11) **EP 1 118 930 A2**
(43) Date of publication of application: **25.07.2001**
(21) Application number: 01101001.4
(22) Date of filing: 17.01.2001
(51) Int. Cl.: G06F 3/023

(54) **Single handed operation of a palmtop device**

(30) Priority: 19.01.2000 US 487727
(71) Applicant: SIEMENS AKTIENGESELLSCHAFT, 80333 München (DE)
(72) Inventor: Sigl, Klaus, 90537 Feucht (DE)

(57) **Abstract**

A hand-held computer system with a screen, a set of function keys and a set of menus, wherein said set of menus is organized in a hierarchical fashion to form a hierarchy of menus, and wherein said set of keys comprises keys for navigating through the hierarchy of menus and for selecting from the hierarchy of menus. A method of one-handed operation of a palmheld computer system, said system comprising a palmheld PC with a set of keys accessible using said one hand, said method comprising: displaying a top-level menu; and navigating through a hierarchy of menus arising from said top-level menu using said set of keys, said navigating being performed using only said one hand.

## Description

### I. DESCRIPTION OF THE INVENTION

### A. Field of the Invention

The present invention is related to navigating through a hierarchy of menus using only function keys in a palmheld PC. Specifically, the present invention provides a technique for inputting information into a palmheld device interactively using one hand. The present invention is embodied in methods for one-handed operation of a palmheld device; a palmheld system that enables navigating through a hierarchy of menus using function keys in a single-handed operation; and a computer program product enabling a palmheld device to be used with a single hand.

### B. Background of the Invention

Palmheld PCs belong to one of the smallest classes of general purpose computing devices. Palmheld PCs typically run general purpose operating systems, for example, Windows CE® by Microsoft®. A typical palmheld PC has four to eight Mbyte RAM, an 80 MHz MIPS processor, and a 240x320 pixel black and white display. Desktop and laptop PCs use a mouse-like device and a keyboard combination to input data. On the other hand, data is typically input into a palmheld PC using a pen and touch screen. The palmheld PCs typically communicate with their peripherals using protocols such as RS232, IrDa, etc. A compact flash slot is provided for making hardware expansions. The palmheld PCs boot from ROMs installed within them.

Palmheld PCs typically have only a black and white display of only 240 x 320 pixels. Therefore, the dialogs and other interactions with the palmheld PCs must be adapted to these restrictions in terms of size, coloring and spatial distribution. Most importantly, the user interface needs to be designed considering the relatively small display screens. For interacting with a palmheld PC, the user is provided with a pen. The pen is used in combination with the touch screen, and a small number of physical entry keys. A Palmheld PC is not provided with a mouse-like device or a keyboard. In lieu of a regular keyboard, a virtual keyboard is displayed on the touch-sensitive screen. The users interface with the palmheld PC using the pen to make selections from the virtual keyboard.

Palmheld devices are often used for interfacing with control systems used in manufacturing facilities, such as, chemical plants. Data related to various parameters related to the control of the manufacturing facility is input using these palmheld devices. In such automation engineering applications, small devices like palmheld devices which need two hands to operate them are often used for interfacing. However, in manufacturing facilities, often there is little space to place such devices. An operator requires one hand to hold the device while the other hand is used to operate the device. Additionally, if the operator uses an operation manual he/she has to continually change over between the palmheld device and the document.

As discussed above, the palmheld PC is operated using a control pen in conjunction with the touch-sensitive screen. The control pen replaces both the mouse-like device and the keyboard. However, the device has to be held with one hand and the pen moved with the other hand.

Therefore, conventional palmheld PCs at least have a problem in that the application often requires a single-handed operation of the device; but then it is inconvenient to use the device using only one hand.

### II. SUMMARY OF THE INVENTION

To solve the above-mentioned problems experienced with conventional palmheld computers, an object of the present invention is to provide a palmheld computing system that can be operated using one hand.

A further object of the present invention is to provide a technique for interfacing with a control system for a manufacturing facility using a palmheld device using only one hand.

To meet the objects of the present invention there is provided a hand-held computer system with a screen, a set of function keys and a set of menus, wherein said set of menus is organized in a hierarchical fashion to form a hierarchy of menus, and wherein said set of keys comprises keys for navigating through the hierarchy of menus and for selecting from the hierarchy of menus.

Preferably said set of keys comprises an up key, a down key, an enter key and an escape key.

Preferably said computer is configured to be held in one hand and operated completely using said one hand and wherein said keys are accessible for operation using said one hand.

Preferably said keys are located on only one side of the screen.

Still preferably, said up key and said down key are used to move up and down, respectively, through a current menu.

Still preferably, said escape key is used to return to a menu in a higher level of hierarchy than the current menu.

Still preferably said enter key is used to move to a menu in a lower level of hierarchy than the current menu.

Another aspect of the present invention, a method of one-handed operation of a palmheld computer system, said system comprising a palmheld PC with a set of keys accessible using said one hand, said method comprising: displaying a top-level menu; and navigating through a hierarchy of menus arising from said top-level menu using said set of keys, said navigating being performed using only said one hand.

Preferably the set of keys comprises an enter key, an escape key, an up key and a down key.

Preferably the method further comprises: selecting an escape key to return to a higher level menu; and selecting an enter key to select a menu item.

Preferably the method further comprises: using said up key and said down key to move up and down, respectively, through the current menu.

Yet another aspect of the present invention is a method of one-handed interfacing with a control system in a manufacturing facility using a palmheld PC with a set of keys, said set of keys being accessible to said one hand, said method comprising: holding the palmheld PC with one hand; and navigating through a hierarchy of menus using said one hand, wherein said navigating is performed using the set of keys accessible to said one hand.

Preferably, the set of keys comprises an enter key, an escape key, an up key and a down key.

Still another aspect of the present invention is a computer program product including a computer readable medium, said medium containing instructions comprising: a menu code to display a hierarchy of menus in a palmsized PC; and a navigation code that enables a user to navigate through said hierarchy of menus using a set of keys completely accessible by a same hand that holds said palmsized PC.

Preferably, the set of keys comprises an enter, an escape key, an up key and a down key.

Preferably, said up key and said down key are used to move up and down, respectively, through a current menu.

Still preferably, said escape key is used to return to a menu in a higher level of hierarchy than the current menu.

Still preferably said enter key is used to select a menu item.

### III. BRIEF DESCRIPTION OF THE DRAWINGS

The above objectives and advantages of the present invention will become more apparent by describing in detail preferred embodiments thereof with reference to the attached drawings in which:
FIG.1 shows screens depicting hierarchical menus in a preferred embodiment.
FIG.2 shows a top-level menu.
FIG.3 shows a menu at a bottom level in the main hierarchy
FIG.4 shows a computer system according to a preferred embodiment of the present invention.
FIG.5 shows a preferred embodiment of a palmheld PC.
FIG.6 shows a flowchart illustrating a preferred embodiment of the method according to the present invention.

### IV. DETAILED DESCRIPTION OF THE PREFERRED EMBODIMENT

### A. Computer System

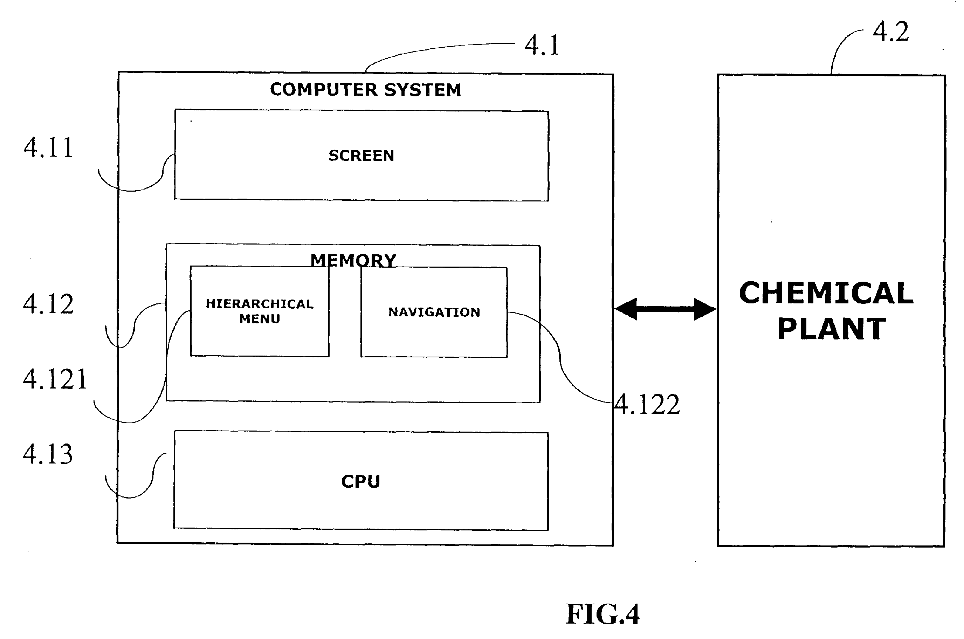

The preferred embodiment of the computer system according to the present invention is shown in FIG.4. A palmheld PC computer system 4.1 is used to interface with a chemical plant 4.2. The chemical plant is controlled using a large number of parameters, for example, temperature, pressure, electrical current, etc. A plant operator or an automatic system sets a value for a specific parameter. The palmheld computer system comprises a screen 4.11, a CPU 4.13 and a memory 4.12. The memory further comprises information 4.121 on the hierarchical menus. The navigation instructions 4.122 help the computer system to navigate through the hierarchical menus using only a set of function keys that are operable using the same hand that holds the palmsized PC. The plant operator uses the function keys in the palmheld PC computer system 4.1 to navigate through a hierarchy of menus.

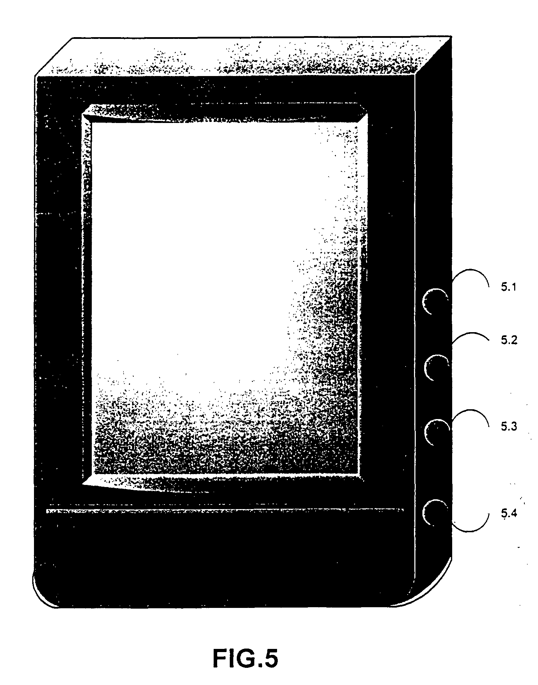

FIG.5 shows a preferred embodiment of a palmsized PC. As can be seen, the palmsized PC of this embodiment has only four function keys. They are the escape key 5.1, the up key 5.2, the down key 5.3 and the enter key 5.4.

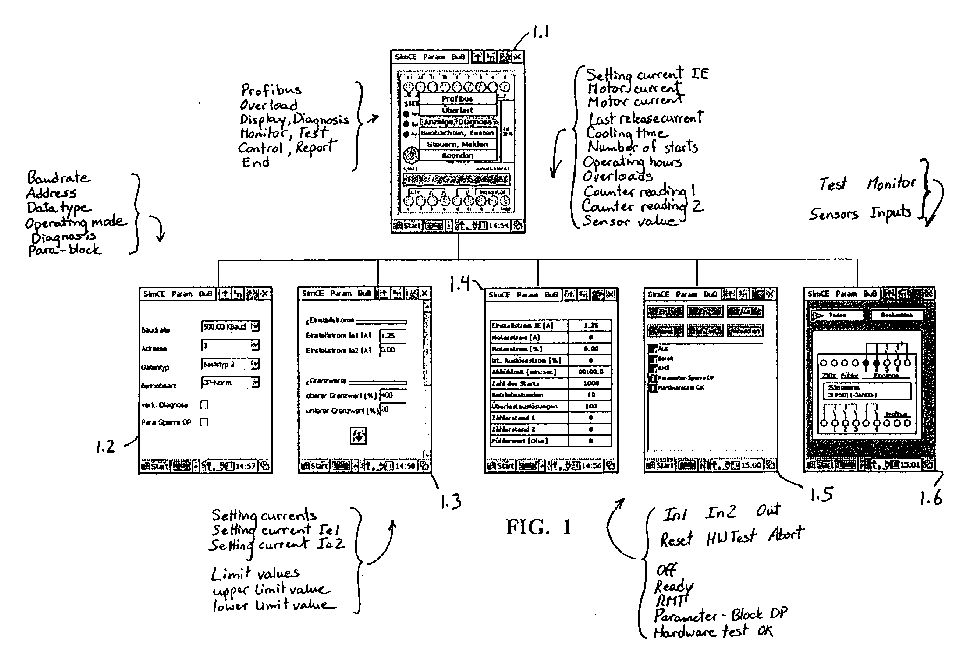

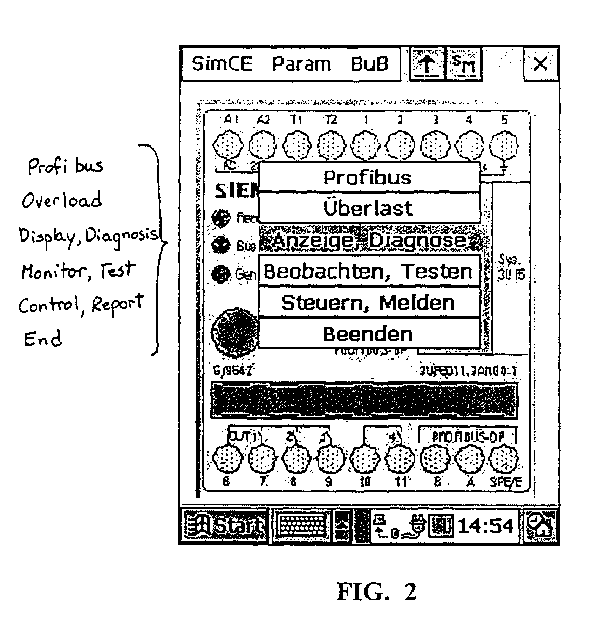

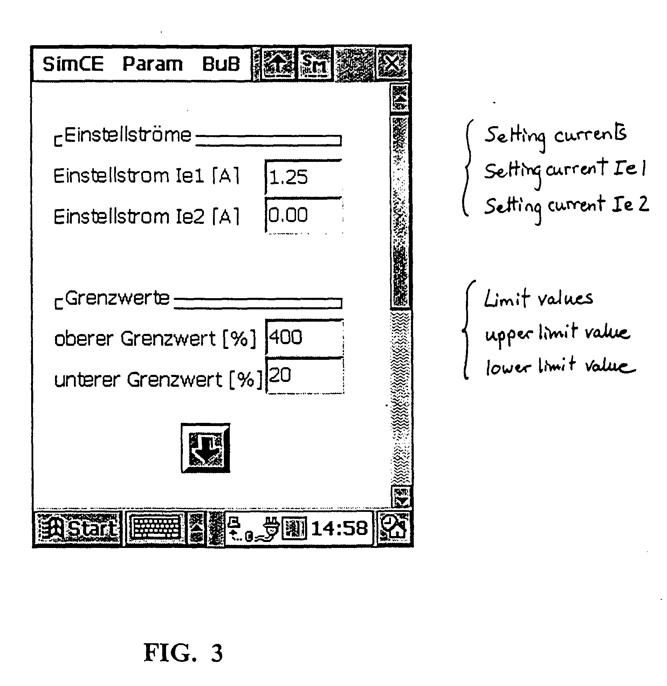

FIG.1 shows a preferred embodiment of a hierarchy of menus according to a preferred embodiment. In this embodiment, the screens are arranged in a two-level hierarchy. Initially a top-level menu 1.1 is displayed. The operator can move up and down the menu choices using the up key 5.2 and down key 5.3. The top-level menu comprises entry into a set of sub-menus that are in the second-level of hierarchy. The user selects a sub-menu by pressing the enter key 5.4. The selected submenu (one of submenu 1.2-1.6) is then displayed. The user can go back to the top-level menu using the escape key 5.1. FIGs. 2 and 3 show the top-level menu and one of the sub-menus 1.3, respectively, in greater detail.

### B. Method of using a palmsized PC single-handedly.

Another important aspect of the present invention is a method for using a palmsized PC with the same hand that is used to hold the palmsized PC. As will be appreciated by a skilled artisan, in a manufacturing facility a palmsized PC that is used to interface with a control system would advantageously be operated using the same hand that is used to hold the palmsized PC. For instance, when the user may need to hold a document in one hand and the palmsized PC in the other. Such a situation occurs commonly when a plant operator needs to perform adjustments to actual instruments by referring to a document while at the same time interfacing with the facility control system using the palmsized PC.

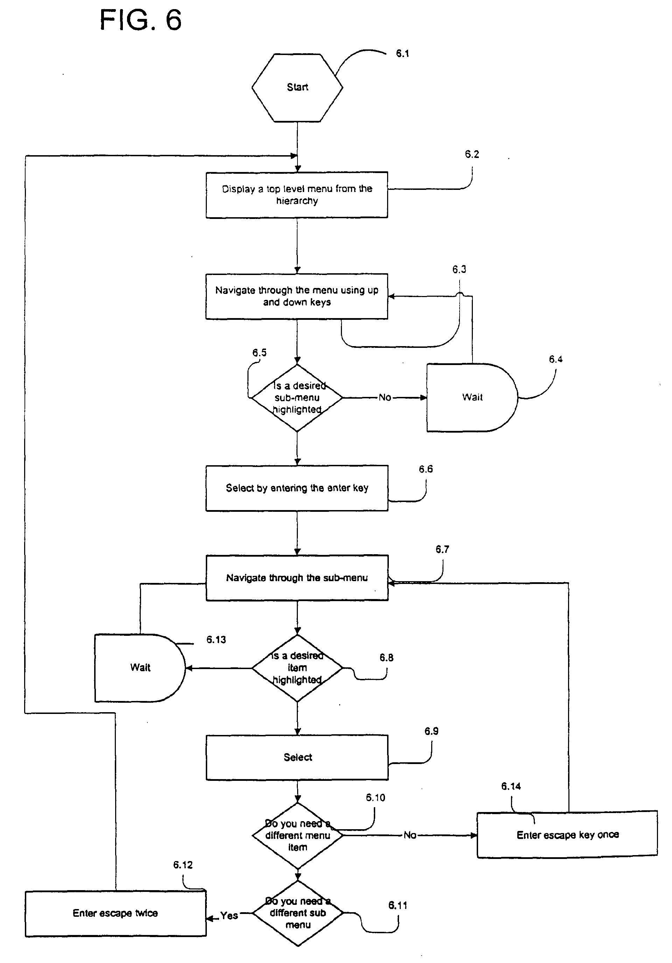

A preferred embodiment of a method for a single-handed operation of the palmsized PC of FIG.5 is illustrated in FIG.6. A top-level menu is displayed in step 6.2. By looping through steps 6.4, 6.5 and 6.3, a desired sub-menu is highlighted. In step 6.6 the desired sub-menu is selected by actuating the enter key. Once the sub-menu is selected, the user navigates through the sub-menu in step 6.7. By looping through steps 6.8, 6.13 and 6.7 a desired item within the sub-menu is highlighted. The desired menu item is selected in step 6.9. If the user needs a different menu item in step 6.10, an escape key is depressed once to go back and navigate through the sub-menu. Step 6.11 determines if the user needs to select an item from a different sub-menu; in which case the escape key is pressed twice to go back and start over from step 6.2.

### C. Computer Program Product

Yet another important aspect of the present invention is a computer program product. The computer program product comprises a computer readable medium. This computer readable medium includes, but is not limited to, floppy disks, hard disks, CDs, tapes, etc. Downloading the software through a data transmission medium, e. g., the Internet, is also within the scope of the present invention.

The computer readable medium comprises a menu code and a navigation code. The menu code enables the palmheld PC to create and display a hierarchical menu. The navigation code enables a user to navigate through the hierarchical menus using only the function keys provided.

It should be noted that the computer code is not restricted to any particular type of code. The code includes, but is not limited to, source code, object code, executable code, etc. Further, the code could be in any type of language including, but not limited to, higher level languages, assembly language, machine language, etc.

Other modifications and variations to the invention will be apparent to those skilled in the art from the foregoing disclosure and teachings. Thus, while only certain embodiments of the invention have been specifically described herein, it will be apparent that numerous modifications may be made thereto without departing from the spirit and scope of the invention.

## Claims

1. A hand-held computer system with a screen, a set of function keys and a set of menus, wherein said set of menus is organized in a hierarchical fashion to form a hierarchy of menus, and wherein said set of keys comprises keys for navigating through the hierarchy of menus and for selecting from the hierarchy of menus.

2. The computer system of claim 1 wherein said set of keys comprises an up key, a down key, an enter key and an escape key.

3. The computer system of claim 1 wherein said computer is configured to be held in one hand and operated completely using said one hand and wherein said keys are accessible for operation using said one hand.

4. The computer system of claim 3 wherein said keys are located on only one side of the screen.

5. The computer system of claim 2 wherein said up key and said down key are used to move up and down, respectively, through a current menu.

6. The computer system of claim 2 wherein said escape key is used to return to a menu in a higher level of hierarchy than the current menu.

7. The computer system of claim 2 wherein said enter key is used to move to a menu in a lower level of hierarchy than the current menu.

8. A method of one-handed operation of a palmheld computer system, said system comprising a palmheld PC with a set of keys accessible using said one hand, said method comprising:
(a) displaying a top-level menu; and
(b) navigating through a hierarchy of menus arising from said top-level menu using said set of keys, said navigating being performed using only said one hand.

9. The method of claim 8, wherein the set of keys comprises an enter key, an escape key, an up key and a down key.

10. The method of claim 9, further comprising:
(c) selecting an escape key to return to a higher level menu; and
(d) selecting an enter key to select a menu item.

11. The method of claim 9 further comprising:
(e) using said up key and said down key to move up and down, respectively, through the current menu.

12. A method of one-handed interfacing with a control system in a manufacturing facility using a palmheld PC with a set of keys, said set of keys being accessible to said one hand, said method comprising:
(a) holding the palmheld PC with one hand; and
(b) navigating through a hierarchy of menus using said one hand,
wherein said navigating is performed using the set of keys accessible to said one hand.

13. The method of claim 12, wherein the set of keys comprises an enter key, an escape key, an up key and a down key.

14. A computer program product including a computer readable medium, said medium containing instructions comprising:
a menu code to display a hierarchy of menus in a palmsized PC; and
a navigation code that enables a user to navigate through said hierarchy of menus using a set of keys completely accessible by a same hand that holds said palmsized PC.

15. The computer program product of claim 14, wherein the set of keys comprises an enter, an escape key, an up key and a down key.

16. The computer program product of claim 15 wherein said up key and said down key are used to move up and down, respectively, through a current menu.

17. The computer program product of claim 15 wherein said escape key is used to return to a menu in a higher level of hierarchy than the current menu.

18. The computer program product of claim 15 wherein said enter key is used to select a menu item.
